# EUROPEAN PATENT SPECIFICATION

(11) **EP 3 803 157 B1**
(45) Date of publication and mention of the grant of the patent: **23.03.2022**
(21) Application number: 19721143.6
(22) Date of filing: 09.04.2019
(51) Int. Cl.: F16H 3/089, F16D 15/00, F16H 63/30

(54) **TRANSMISSION ASSEMBLY**
GETRIEBEANORDNUNG
ENSEMBLE DE TRANSMISSION

(30) Priority: 04.06.2018 IT 201800006007
(43) Date of publication of application: 14.04.2021
(73) Proprietor: Pasotti, Mario, 25018 Montichiari, Brescia (IT)
(72) Inventor: Pasotti, Mario, 25018 Montichiari, Brescia (IT)
(74) Representative: Gamba, Alessandro
(86) International application number: PCT/IB2019/052901
(87) International publication number: WO 2019/234512

(56) References cited:
- WO-A1-2016/178645
- DE-A1-102007 007 369
- US-A1- 2012 048 044

## Description

The object of the present invention is a transmission assembly and a gearbox system that comprises said transmission assembly.

In the present description, "transmission assembly" means a plurality of components suitable to receive the action of motion from an outer drive assembly to transmit it to an outer driven assembly. In the embodiment wherein the transmission assembly is comprised in a gearbox system of a vehicle, said outer drive assembly is of the type producing the action of motion of the vehicle (i.e. the motor unit) while said outer driven assembly is of the type suitable to transfer the action of motion to the drive wheels (i.e. the differential unit). However, preferably, the transmission assembly is also used in sectors other than the automotive sector.

In the state of the art, a plurality of solutions are known for transmission assemblies wherein the transmission is obtained by controlling the engagement of a pair of gears, wherein one gear is known as the drive gear, while the other gear is known as the driven gear.

In other words, the reciprocal engagement is obtained through the reciprocal movement of the two gears that are driven in reciprocal engagement when required.

Such solutions of the known art are therefore characterized by the problem related to the need to move the gears and to drive them in reciprocal engagement or in reciprocal disengagement.

US 2012/048044 A1 discloses, in the opinion of the examining division of the European Patent Office a transmission assembly falling within the wording of the pre-characterizing portion of claim 1, i.e. a transmission assembly wherein the gears are not moved reciprocally to be brought into reciprocal engagement.

The purpose of the present invention is to propose an alternative transmission assembly.

Such object is achieved by a transmission assembly made according to claim 1. This purpose is further achieved by a gearbox system comprising said transmission assembly according to claim 14 respectively. The dependent claims describe further variants of preferred embodiments.

The features and advantages of the transmission assembly and the gearbox system which comprises it according to the present invention will be apparent from the description given below, provided by way of nonlimiting example, in accordance with the accompanying figures, wherein:

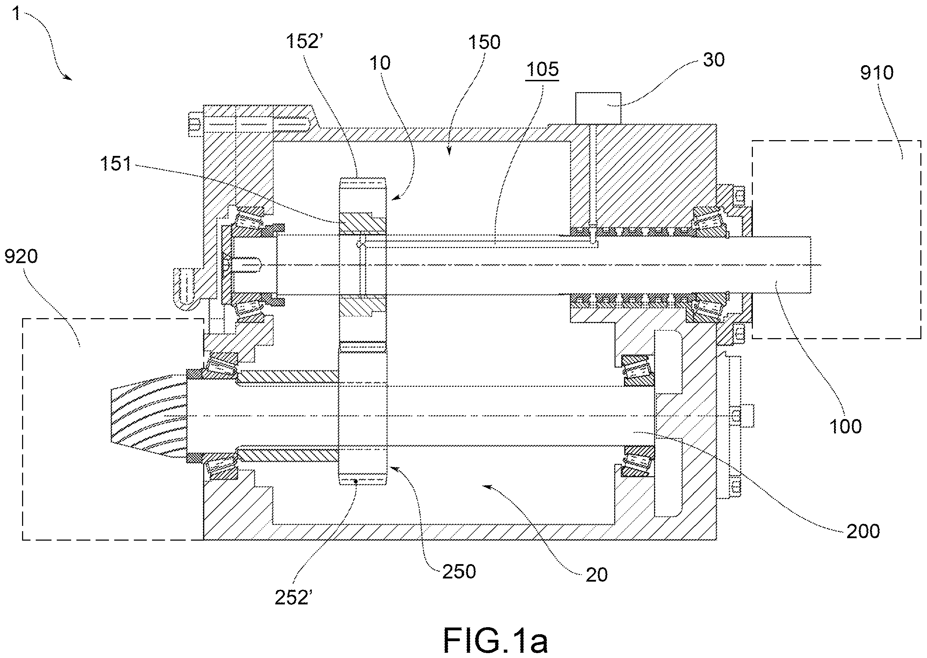

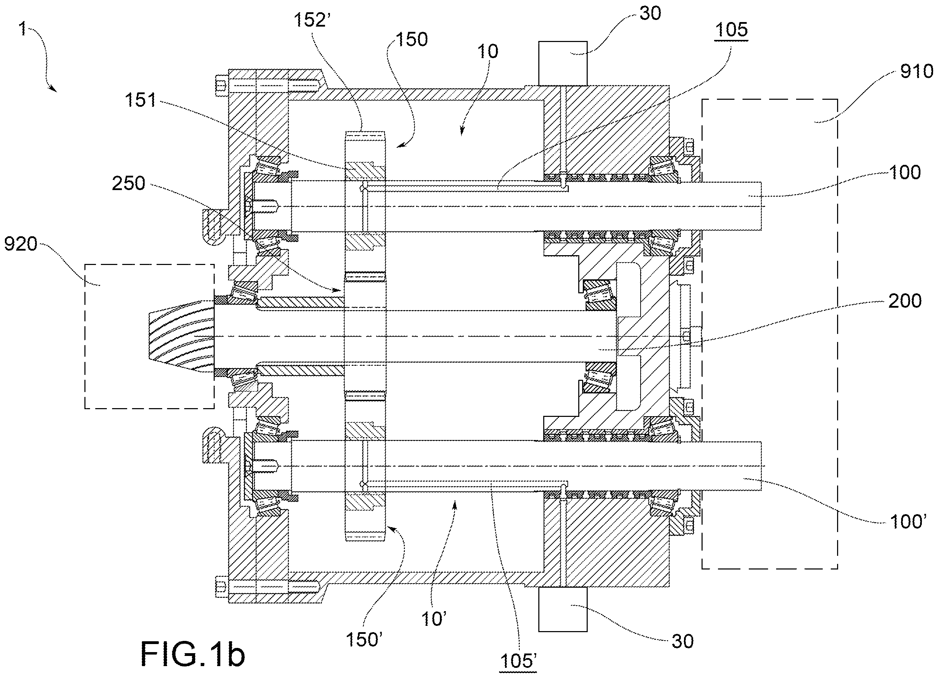

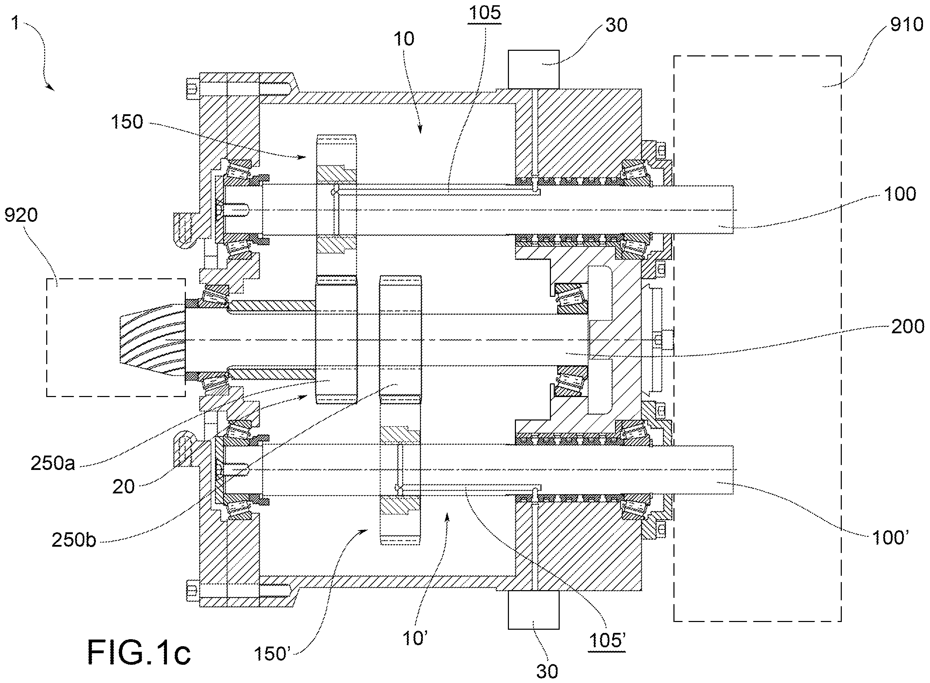

- Figures 1a, 1b and 1c show three schematic examples of embodiment of the transmission assembly according to the present invention;

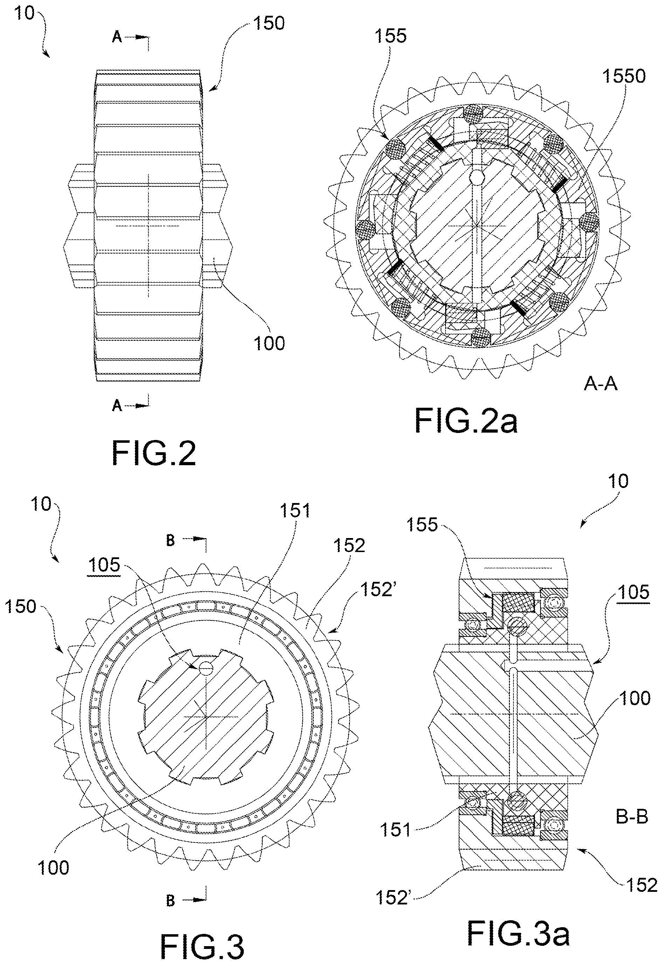

- Figures 2 and 2a represent a side view and a cross-sectional view along a cross-sectional plane A-A as shown in Figure 2 of a drive unit comprised in the transmission assembly as shown in Figures 1a and 1b;
- Figures 3 and 3a show a front view and a cross-sectional view along a cross-sectional plane B-B in Figure 3 of the drive unit as shown in Figures 2 and 2a;

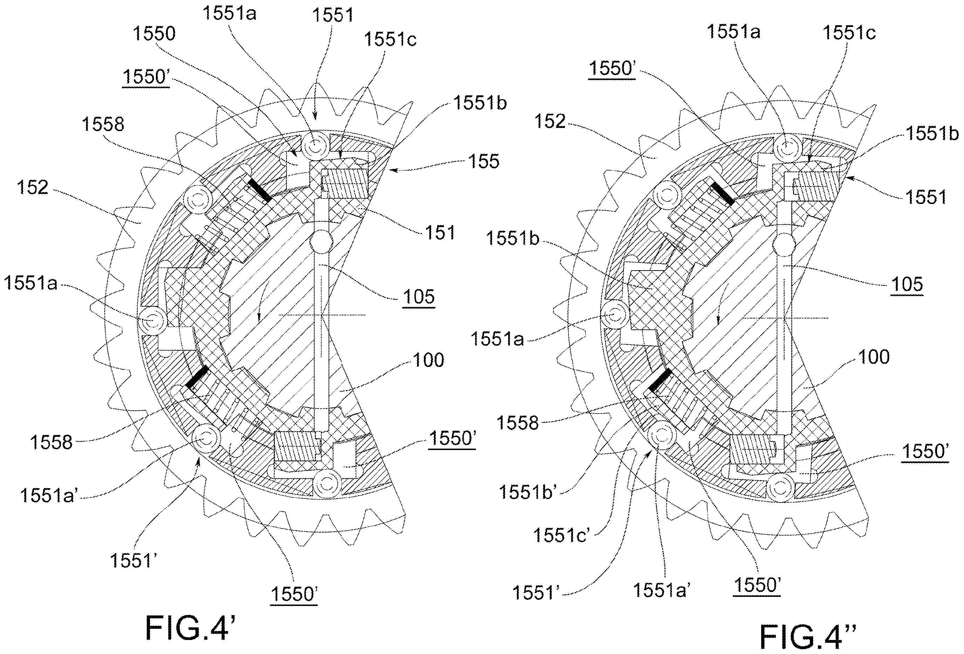

- Figures 4' and 4" represent two partial cross-sections of the drive unit in a passive and an active configuration respectively;
- Figures 5a, 5b and 5c show a side view, a bottom view and a front view of a gearbox system according to the present invention;
- Figures 6' and 6" show two cross-sectional views of the gearbox system according to the cross-sectional planes C-C and D-D in Figure 5b;
- Figure 7 shows a cross-sectional view of a hydraulic drive control unit comprising solenoid control valves comprised in the gearbox system object of the present invention.

In accordance with the attached figures, a transmission assembly according to the present invention is indicated collectively at 1.

The transmission assembly 1 is adapted to receive an action of motion from an outer drive assembly 910 for transmitting it to an outer driven assembly 920. As described in detail hereinafter, in a preferred embodiment, the transmission assembly 1 is adapted for specific use in the automotive sector. In particular, the transmission assembly 1 is adapted to be part of a gearbox system according to the present invention.

In any case, the scope of the transmission assembly 1 is not specifically limited to the automotive sector or to a vehicle transmission system.

Specifically, the transmission assembly 1 object of the present invention does not present any limitation due to the type of outer drive assembly 910 or outer driven assembly 910.

According to the present invention, the transmission assembly 1 basically comprises two groups of components: a drive unit 10 and a driven unit 20 arranged serially in the kinematic chain. The drive unit 10 is operatively connectable to the said outer drive unit 910, to receive the action of motion thereof. The driven unit 20, on the other hand, is connected to the drive unit 10 to receive the motion thereof, being in turn connectable to the outer driven unit 920 in such a way as to transmit the motion thereof to the latter.

According to a preferred embodiment, the outer drive assembly 910 directly engages and drives in rotation the drive unit 10.

According to other preferred embodiments, the outer drive unit 910 indirectly engages and drives in rotation the drive unit 10: in such embodiments, between the outer drive assembly 910 and the drive unit 10, there is an additional component or group of components.

According to the present invention, the drive unit 10 comprises a drive shaft 100 driven in rotation by the outer drive assembly 910 and at least one drive gear 150 operatively connected to the drive shaft 100. According to certain variant embodiments, the drive unit 10 comprises a plurality of drive shafts 100, 100' to which at least one respective drive gear 150' is operatively connected.

At the same time, according to the present invention, the driven unit 20 comprises a driven shaft 200 suitable to transmit the rotary motion to the outer driven assembly 920 and at least one driven gear 250 integrally connected to the driven shaft 200.

According to the present invention, the drive unit 10 and the driven unit 20 are constantly engaged. In particular, the drive gear 200 is constantly engaged with the drive gear 100.

In fact, the drive gear 150 comprises the drive gear teeth 152' (of the drive gear 150) engaged with the driven gear teeth 252' (of the driven gear 250).

According to the present invention, the drive gear 150 comprises, concentrically to the drive shaft 100, an inner annular element 151 connected to the drive shaft 100 and an outer annular element 152 on which the drive gear teeth 152' are obtained.

According to the present invention, the inner annular element 151 and the outer annular element 152 are mutually joined together by at least one rotary bearing unit. The inner annular element 151 and outer annular element 152 are, in fact, free to rotate independently of each other.

In the present invention, in fact, the drive gear 150 comprises a hydraulic drive unit 155 hydraulically powered by a hydraulic conduit 105 obtained in the drive shaft 100 to drive the reciprocal engagement between the inner annular element 151 and the outer annular element 152.

In fact, the hydraulic drive unit 155 is interposed between the inner annular element 151 and the outer annular element 152 and is hydraulically configurable in an active configuration in which the outer annular element 152 is connected to the inner annular element 151 and thereby driven in rotation, and in a passive configuration wherein the outer annular element 152 is rotatably disconnected from the inner annular element 151.

In other words, in the present invention, the drive gear teeth 152' are always engaged with the driven gear teeth 252', but only in a configuration wherein the hydraulic drive unit 155 is (driven hydraulically) in the active configuration, the drive gear teeth 152' drive in rotation the driven drive teeth 252'.

According to the invention the hydraulic drive unit 155 comprises an intermediate annular structure 1550 interposed between the inner annular element 151 and the outer annular element 152. Said intermediate annular structure 1550 has at least one drive housing 1550' in which is housed a hydraulic drive device 1551 (in turn comprised in said hydraulic drive unit 155). In particular, the drive housing 1550' has special openings facing the inner annular element 151 and the outer annular element 152.

In particular, as described in detail hereinafter, said intermediate annular structure 1550 is hydraulically commandable in a preferred circumferential position. In other words, the angular position of the intermediate annular structure 1550 with respect to the drive shaft 100 and/or with respect to the axis of rotation of said drive shaft 100 is hydraulically adjustable.

According to the invention the hydraulic drive device 1551 comprises an engagement element 1551a that is movable radially between a passive radial position and an active radial position in which it performs an engagement action on the outer annular element 152. Preferably, said engagement element 1551a is an insert, preferably cylindrical in shape. According to the invention said engagement element 1551a, operates in the drive housing 1550', engaging, through the respective specially created openings, the inner annular element 151 and the outer annular element 152.

According to the invention moreover, the hydraulic drive device 1551 also comprises a drive member 1551b engaged by the engagement element 1551a.

In particular, the drive member 1551b hydraulically drives the movement of the intermediate annular structure 1550 in a circumferential direction. The movement of the intermediate annular structure 1550 in turn moves the engagement element 1551a with respect to the drive member 1551b. The change in radial position of the engagement element 1551a corresponds to the reciprocal movement between the engagement element 1551a and the drive member 1551b.

According to the present invention, the change of configuration of the hydraulic drive unit 155 corresponds to the movement in the circumferential direction of the intermediate annular structure 1550 and therefore of the change of relative position between the engagement element 1551a and the engagement member 1551b.

According to a preferred embodiment, the drive member 1551b comprises an inclined plane 1551c on which lies the engagement element 1551a. The movement of the intermediate annular structure 1550 corresponds to the change of position of the engagement element 1551a on said inclined plane 1551c and, at the same time, its change of position in the radial direction.

According to the above, the drive member 1551b, and in particular its inclined plane 1551c, does not change its angular position; the intermediate annular structure 1550 moves in a circumferential and/or tangential direction; the engagement element 1551a is moved in a radial direction.

According to a preferred embodiment, the intermediate annular structure 1550 has a plurality of drive housings 1550', which are angularly equidistant from each other.

Preferably, wherein some drive housings 1550' house the hydraulic drive device 1551, the remaining drive housings 1550' house the auxiliary drive devices 1551'. Preferably, the purpose of the auxiliary drive devices 1551' is the same as the drive devices 1551 described above.

In particular, the auxiliary drive device 1551' comprises an auxiliary engagement element 1551a' which is radially movable between a passive radial position and an active radial position in which it performs an engagement action on the outer annular element 152.

In addition, preferably, the auxiliary drive device 1551' comprises an auxiliary drive member 1551b' engaged by the auxiliary engagement element 1551a'. In this way, the reciprocal movement between the auxiliary engagement element 1551a' and the auxiliary drive member 1551b', induced by the movement in the circumferential direction of the intermediate annular structure 1550, corresponds to the change in radial position of the auxiliary engagement element 1551a'.

In the hydraulic drive device 1551 there is the direct action of the hydraulic fluid. The auxiliary drive device 1551', on the other hand, is pulled in movement by the action that acts on the hydraulic drive device 1551 and thus on the intermediate annular structure 1550.

As shown in the drawings, the auxiliary engagement element 1551a' and the auxiliary drive member 1551b' have the same shape as the above-described engagement element 1551a and the drive member 1551b.

For example, in a preferred embodiment, moreover, the auxiliary drive member 1551b' comprises an auxiliary inclined plane 1551c' on which lies the auxiliary engagement element 1551a'. The movement of the intermediate annular structure 1550 corresponds to the change of position of the auxiliary engagement element 1551a' on said auxiliary inclined plane 1551c' and, at the same time, its change of position in the radial direction.

According to the above, the auxiliary drive member 1551b', and in particular its auxiliary inclined plane 1551c', does not change its angular position; the intermediate annular structure 1550 moves in a circumferential and/or tangential direction; the auxiliary engagement element 1551a is moved in a radial direction.

According to the present embodiment, preferably, hydraulic drive devices 1551 and auxiliary drive devices 1551' alternate circumferentially.

According to the present invention, the drive unit 155 further comprises at least one elastic return element 1558 adapted to act in the direction opposite to the hydraulic drive devices 1551 to keep the drive unit 155 in a passive configuration.

Preferably, each auxiliary drive device 1551' comprises an elastic return element 1558 which carries out a thrust action opposite to the hydraulic drive action carried out by the hydraulic drive devices 1551.

According to a preferred embodiment, the elastic return element 1558 is a spring, for example, of the helical type, which works in compression.

According to a preferred embodiment, each hydraulic drive member 1551a, and each auxiliary drive member 1551a', if any, are integrally connected to the inner annular element 151.

In other words, each hydraulic drive member 1551a, and each auxiliary drive member 1551a', if any, is constantly moved in rotation by the inner annular element 151 and the intermediate annular structure 155 integrally connected to the drive shaft 100.

According to a variant embodiment, the drive unit 10 comprises a plurality of drive gears 150a, 150b, 150c, 150d, each hydraulically driven by a specific hydraulic conduit 105a, 105b, 105c, 105d obtained in the drive shaft 100 as described above.

According to such embodiment, the drive unit 20 comprises a plurality of driven gears 250a, 250b, 250c, 250d, each engaged to the respective drive gear 150a, 150b, 150c, 150d.

According to the present invention, a single drive gear 150a, 150b, 150c, 150d is thus hydraulically commandable in engagement to drive in rotation the respective driven gear 250a, 250b, 250c, 250d.

According to such embodiment, the rotational speed transmitted corresponds to the type of teeth of the various gears.

In addition, there are also other variant embodiments, wherein the transmission assembly 10 comprises a plurality of drive units 10, 10', each comprising a drive shaft 100, 100' and at least one drive gear 150, 150'.

If necessary, each drive unit 10, 10' on the respective drive shaft 100, 100' comprises at least one drive gear 150, 150' engaged with a respective driven gear 250.

Otherwise, the two drive gears 150, 150' of two distinct drive units 10, 10' are engaged with the same driven gear 250.

According to the present invention, the transmission assembly also comprises a hydraulic drive control unit 30 which regulates the flow(s) of liquid within the drive conduit(s) .

The hydraulic drive control unit 30 has a solenoid valve at each drive conduit 105 in order to control the flow thereof.

For example, in an embodiment with four drive conduits 105a, 105b, 105c, 105d, the hydraulic drive control unit 30 comprises four solenoid control valves 300a, 300b, 300c, 300d.

For example, in an embodiment with a plurality of drive units, a plurality of drive control units correspond (with their respective solenoid control valves).

As already mentioned, the object of the present invention is a gearbox system 900 of a vehicle that comprises a transmission assembly 1 in accordance with that which is described above.

In particular, the gearbox system 900 is connectable to an outer drive assembly 910, such as the vehicle's motor unit, and connectable to an outer driven assembly 920, such as the differential unit that transmits motion to the vehicle's wheels. Preferably, the outer driven assembly 920 has a variable shape depending on the type of traction of the vehicle, i.e. front-wheel drive, rear-wheel drive, all-wheel drive.

According to a preferred embodiment, the outer driven assembly 920 is comprised in the gearbox system 900, serially connected to the transmission assembly 1 and in particular to the driven shaft 20 thereof.

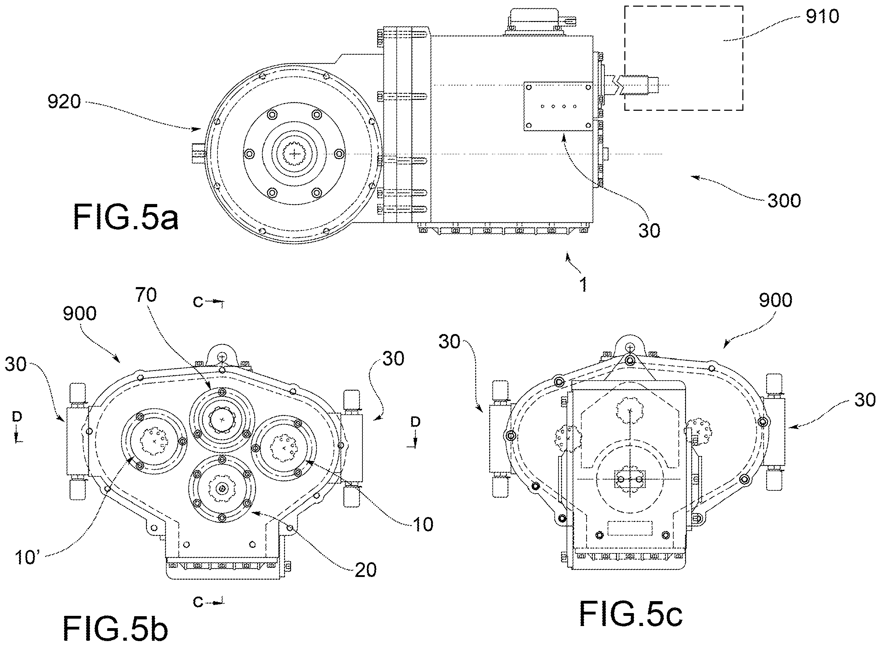

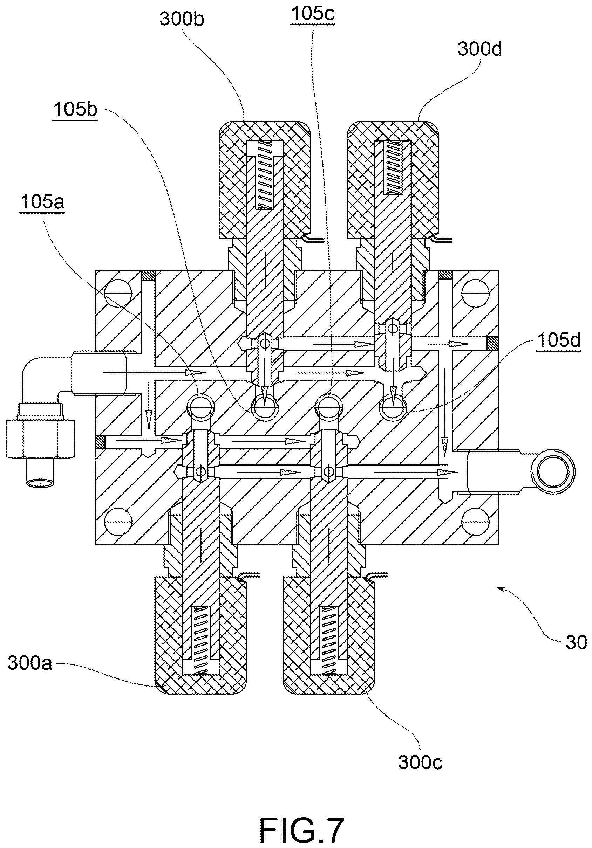

According to a preferred embodiment, such as the one shown by way of example in figures 5 to 7, the gearbox system 900 further comprises an input unit 70 positioned between the outer drive assembly 910 and the transmission assembly 1.

Preferably, the input unit 70 is located between the outer drive assembly 910 and drive unit 10.

Preferably, said input unit 70 comprises an input shaft 700 driven in rotation by the outer drive assembly 910 and an input gear 750. Said input shaft 700, in particular by means of the input gear 750, is engaged with the drive shaft 100 to drive it in rotation according to the action of the outer drive assembly 910 (preferably, the drive unit comprises an input drive gear 157 in engagement with the input gear 750.

According to a preferred embodiment, the input unit 70 is positioned between the outer drive assembly 910 and the driven unit 20.

In particular, in fact, the input unit 70 comprises a motor brake gear 758 engaging the driven unit 20, bypassing the drive unit 10. Preferably, the motor brake gear 758 is engaged to the input shaft 70 by means of a free wheel so that only in some kinematic situations is it moved in rotation involving also the rotation of the driven shaft 200 (being for example engaged to a drive gear 250), thus obtaining the "motor brake" effect in the outer driven assembly 920.

In particular, in fact, the input unit 70 comprises a reversing gear 755 engaging the driven unit 20, bypassing the drive unit 10 to drive it in rotation in a different direction relative to the preferential direction of rotation imparted by the drive unit 10. Preferably, the reversing gear 755 is engaged on the driven shaft 200 which comprises a reversing driven gear 257.

According to a preferred embodiment, the reversing gear 755 is mechanically driven in engagement with the reversing driven gear 257.

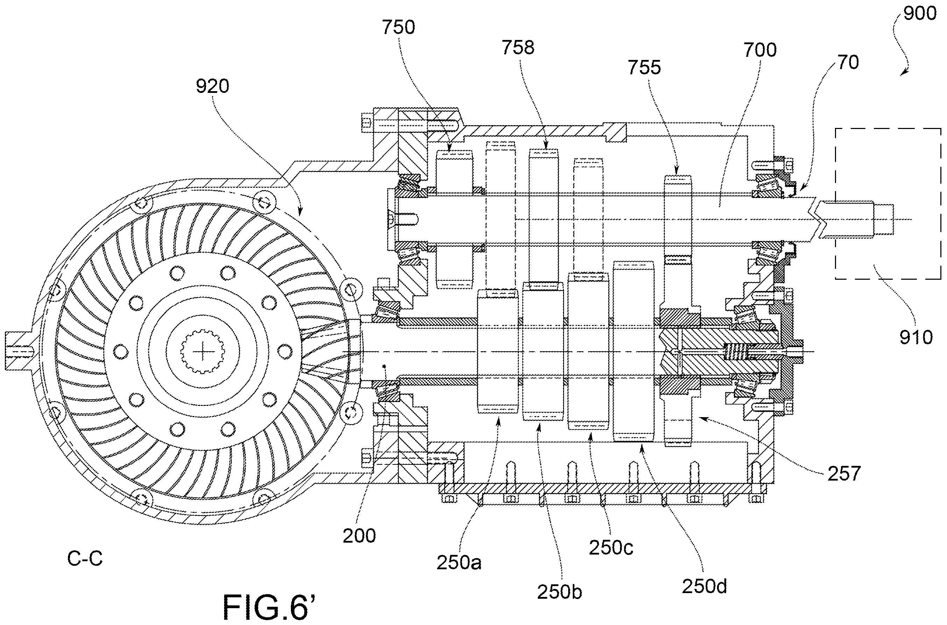

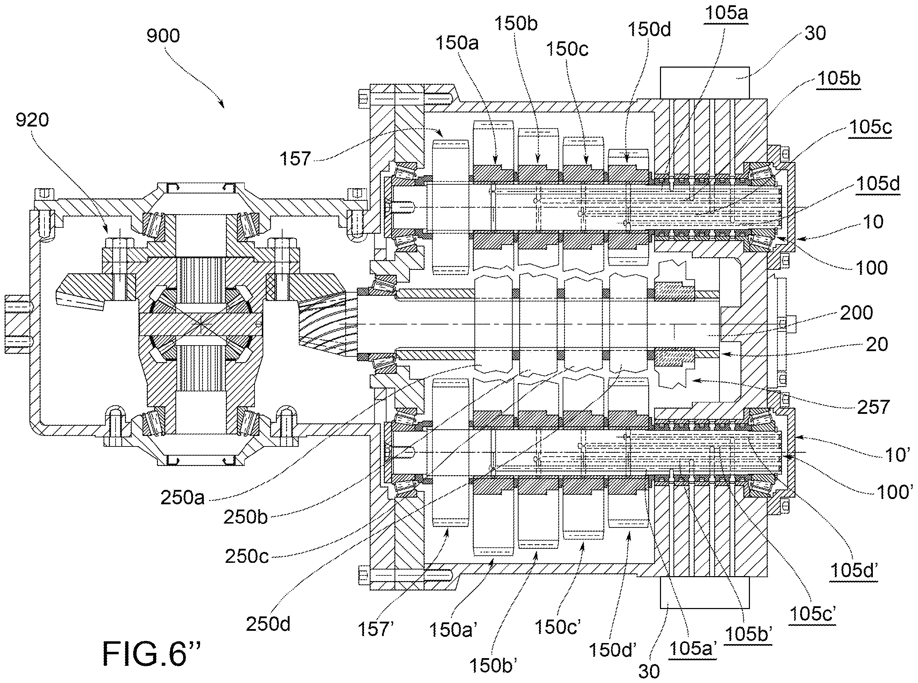

According to a variant embodiment, as shown by way of example in Figure 6', the reversing driven gear 257 offers a solution similar to the solutions of the drive gears 150 described above, being hydraulically drivable. In other words, in a preferred embodiment, the reversing gear 755 and the reversing driven gear 257 are always engaged to each other, but the interaction between the input shaft 700 and the driven shaft 200 is achieved exclusively by means of the hydraulic drive of the reversing driven gear 257.

In the embodiments shown by way of example, the respective shafts comprised in the transmission assembly 1 and/or in the gearbox assembly 900 have parallel axes, however, in other embodiments solutions are provided wherein the shafts are arranged orthogonally to each other or are mutually oblique.

Innovatively, the transmission assembly and the gearbox system that comprises it, which are object of the present invention, fully allow the achievement of the object set forth by the invention, i.e. to solve the problems and limitations typical of the state-of-the-art solutions.

Advantageously, no relative movement between the gears is necessary.

Advantageously, the control of the transmission of the motion between the drive unit and the driven unit is exclusively hydraulic.

Advantageously, the transmission assembly and also the gearbox system, which comprises it, are extremely compact in size.

Advantageously, the transmission assembly and gearbox assembly have extremely short drive engagement times, particularly when compared to solutions wherein engagement times include gear movement times: the engagement times are, in fact, exclusively a direct function of hydraulic drive times.

Advantageously, the transmission assembly is commandable by means of a hydraulic switch. In other words, the management of the transmission (e.g. gearbox system) is achieved by electronically managing the hydraulics of the transmission assembly.

Advantageously, an automatic gearbox system is achievable by controlling the gear change via a hydraulic switch connected to a vehicle control unit.

Advantageously, the gearbox system has a lighter, "jerk-free" gear change, providing greater driving pleasure.

Advantageously, the transmission assembly and/or the gearbox system do not require a clutch, leaving the control to only the hydraulics management and to the management of the flow rates in the respective conduits.

Advantageously, if a clutch is provided, it may only be necessary when starting up the vehicle and when reversing, thus offering extremely low fuel consumption.

Advantageously, the transmission assembly allows intermittent management of motion transmission to the outer driven assembly.

It is apparent that one skilled in the art, in order to meet contingent needs, may make changes to the transmission assembly and to the embodiment variants described and the gearbox system that comprises it, all contained within the scope of protection as defined by the following claims.

## Claims

1. A transmission assembly (1) adapted to receive an action of motion from an outer drive assembly (910) for transmitting it to an outer driven assembly (920), wherein the transmission assembly (1) comprises:
i) a drive unit (10) operatively connectable to said outer drive assembly (910), comprising:
- a drive shaft (100) driven in rotation by the outer drive assembly (910);
- at least one drive gear (150) operatively connected to the drive shaft (100);
ii) a driven unit (20) operatively connectable to the outer driven assembly (920), comprising:
- a driven shaft (200) adapted to transmit the rotary motion to the outer driven assembly (920);
- at least one driven gear (250) integrally connected to the driven shaft (200), constantly engaged with the at least one drive gear (150);
wherein the at least one drive gear (150) comprises, concentrically with respect to the drive shaft (100), an inner annular element (151) integrally connected to the drive shaft (100) and an outer annular element (152) comprising drive gear teeth (152') engaged with driven gear teeth (252');
wherein the drive gear (150) comprises a hydraulic drive unit (155) hydraulically supplied by a hydraulic conduit (105) formed in the drive shaft (100), wherein said hydraulic drive unit (155) is interposed between the inner annular element (151) and the outer annular element (152) and is hydraulically configurable in an active configuration in which the outer annular element (152) is connected to the inner annular element (151) and driven in rotation by the latter, and in a passive configuration wherein the outer annular element (152) is rotatably disconnected from the inner annular element (151); wherein the transmission assembly (1) is **characterized in that** the hydraulic drive unit (155) comprises:
- an intermediate annular structure (1550), interposed between the inner annular element (151) and the outer annular element (152), wherein said intermediate annular structure (1550) has at least one drive housing (1550');
- a hydraulic drive device (1551) housed in said drive housing (1550') and comprising:
i) an engagement element (1551a) which may be moved radially between a passive radial position and an active radial position in which it performs an engagement action on the outer annular element (152);
ii) a drive member (1551b) engaged by the engagement element (1551a);
wherein the drive member (1551b) hydraulically drives the movement in the circumferential direction of the intermediate annular structure (1550) which in turn moves the engagement element (1551a) with respect to the drive member (1551b);
wherein a circumferential movement of the engagement element (1551a) relative to the drive member (1551b) corresponds to a change in radial position of the engagement element (1551a).

2. Transmission assembly (1) according to claim 1, wherein the drive member (1551b) comprises an inclined plane (1551c) on which the engagement element (1551a) lies, wherein a movement of the intermediate annular structure (1550) corresponds to a change in position of the engagement element (1551a) on said inclined plane (1551c) and at the same time the position change in the radial direction.

3. Transmission assembly (1) according to any one of the preceding claims, wherein the intermediate annular structure (1550) has a plurality of drive housings (1550'), mutually angularly equidistant.

4. Transmission assembly (1) according to claim 3, wherein some drive housings (1550') house the hydraulic drive device (1551), while the remaining drive housings (1550') house auxiliary drive devices (1551'), wherein each auxiliary drive device (1551') comprises:
i) an auxiliary engagement element (1551a') which may be moved radially between a passive radial position and an active radial position in which it performs an engagement action on the outer annular element (152);
ii) an auxiliary drive member (1551b') engaged by the engagement element (1551a');
wherein the circumferential movement of the auxiliary engagement element (1551a') relative to the auxiliary drive member (1551b'), induced by the movement in the circumferential direction of the intermediate annular structure (1550), corresponds to a change in radial position of the auxiliary engagement element (1551a').

5. Transmission assembly (1) according to claim 4, wherein the auxiliary drive member (1551b') comprises an auxiliary inclined plane (1551c') on which the auxiliary engagement element (1551a') lies, wherein a movement of the intermediate annular structure (1550) corresponds to a change in position of the auxiliary engagement element (1551a') on said auxiliary inclined plane (1551c') and at the same time the position change in the radial direction.

6. Transmission assembly (1) according to any one of the preceding claims, wherein the drive unit (155) further comprises at least one elastic return element (1558) adapted to act in the direction opposite to the hydraulic drive devices (1551) to keep the drive unit (155) in a passive configuration.

7. Transmission assembly (1) according to claim 6 in combination with any one of claims 3 to 5, each auxiliary drive device (1551') comprises an elastic return element (1558) which carries out a thrust action opposite to the hydraulic drive action carried out by the hydraulic drive devices (1551).

8. Transmission assembly (1) according to any one of claims 1 to 5, wherein each hydraulic drive member (1551a), and each possible auxiliary drive member (1551a'), are integrally connected to the inner annular element (151).

9. Transmission assembly (1) according to any one of the preceding claims, wherein the drive unit (10) comprises a plurality of drive gears (150a, 150b, 150c, 150d) each hydraulically driven by a specific hydraulic conduit (105a, 105b, 105c, 105d) obtained in the drive shaft (100), and the driven unit (20) comprises a plurality of driven gears (250a, 250b, 250c, 250d) each engaged to the respective drive gear (150a, 150b, 150c, 150d).

10. Transmission assembly (1) according to any one of the preceding claims, comprising a plurality of drive units (10, 10') each comprising a drive shaft (100, 100') and at least one drive gear (150, 150').

11. Transmission assembly (1) according to claim 10, wherein each drive unit (10, 10') on a respective drive shaft (100, 100') comprises at least one drive gear (150, 150') engaged with a respective driven gear (250), or the two drive gears (150, 150') are engaged with the same driven gear (250).

12. Transmission assembly (1) according to any one of the preceding claims, comprising a drive control unit (30) comprising a solenoid control valve (300) at the drive conduit (105) or a plurality of solenoid control valves (30a, 30b, 30c, 30d) at a specific drive conduit (105a, 105b, 105c, 105d) adapted to adjust the inlet of the hydraulic drive liquid in said conduit according to the needs.

13. Gearbox system (900), preferably of a vehicle, comprises a transmission assembly (1) according to any one of the preceding claims, connectable to an outer drive assembly (910), such as the motor unit of said vehicle, and connectable to an outer driven assembly (920), such as the differential unit which transmits the motion to the wheels of said vehicle.

14. Gearbox system (900), preferably of a vehicle, according to claim 13, further comprising an input unit (70) positioned between the outer drive assembly (910) and the transmission assembly (1), wherein the input unit (70) comprises:
- an input shaft (700) driven in rotation by the outer drive assembly (910);
- an input gear (750) in engagement with the drive shaft (100) to drive it in rotation;
- a motor brake gear (758) engaged to the drive shaft (700) by means of a free wheel so that only in some kinematic situations it is moved in rotation involving also the rotation of the driven shaft (200).

15. A vehicle gearbox system according to claim 14, wherein the input unit (70) comprises a reversing gear (755) integrally connected to the drive shaft (700) and always engaged with a driven reversing gear (257), the driven reversing gear (257) being connectable/disconnectable to/from the driven shaft (200) .

## Patentansprüche

1. Übertragungsanordnung (1), welche dazu eingerichtet ist, eine Bewegungseinwirkung von einer äußeren Antriebsanordnung (910) zu empfangen, um sie auf eine äußere angetriebene Anordnung (920) zu übertragen, wobei die Übertragungsanordnung (1) umfasst:
i) eine Antriebseinheit (10), welche betriebsmäßig mit der äußeren Antriebsanordnung (910) verbindbar ist, umfassend:
- eine Antriebswelle (100), welche durch die äußere Antriebsanordnung (910) in Drehung versetzt wird;
- wenigstens ein Antriebszahnrad (150), welches betriebsmäßig mit der Antriebswelle (100) verbunden ist;
ii) eine angetriebene Einheit (20), welche betriebsmäßig mit der äußeren angetriebenen Anordnung (920) verbindbar ist, umfassend:
- eine angetriebene Welle (200), welche dazu eingerichtet ist, die Drehbewegung auf die äußere angetriebene Anordnung (920) zu übertragen;
- wenigstens ein angetriebenes Zahnrad (250), welches, konstant mit dem wenigstens einen Antriebszahnrad (150) in Eingriff stehend, integral mit der angetriebenen Welle (200) verbunden ist;
wobei das wenigstens eine Antriebszahnrad (150), konzentrisch in Bezug auf die Antriebswelle (100), ein inneres ringförmiges Element (151), welches integral mit der Antriebswelle (100) verbunden ist, und ein äußeres ringförmiges Element (152) umfasst, welches Antriebszahnradzähne (152') umfasst, welche mit angetriebenen Zahnradzähnen (252') in Eingriff stehen; wobei das Antriebszahnrad (150) eine hydraulische Antriebseinheit (155) umfasst, welche durch eine Hydraulikleitung (105) hydraulisch versorgt wird, die in der Antriebswelle (100) gebildet ist, wobei die hydraulische Antriebseinheit (155) zwischen dem inneren ringförmigen Element (151) und dem äußeren ringförmigen Element (152) eingefügt ist und hydraulisch konfigurierbar ist in eine aktive Konfiguration, in welcher das äußere ringförmige Element (152) mit dem inneren ringförmigen Element (151) verbunden ist und durch das Letztere in Drehung versetzt wird, und in eine passive Konfiguration, wobei das äußere ringförmige Element (152) drehbar von dem inneren ringförmigen Element (151) getrennt ist;
wobei die Übertragungsanordnung (1) **dadurch gekennzeichnet ist, dass** die hydraulische Antriebseinheit (155) umfasst:
- eine ringförmige Zwischenstruktur (1550), welche zwischen dem inneren ringförmigen Element (151) und dem äußeren ringförmigen Element (152) eingefügt ist, wobei die ringförmige Zwischenstruktur (1550) wenigstens ein Antriebsgehäuse (1550') aufweist;
- eine hydraulische Antriebsvorrichtung (1551), welche in dem Antriebsgehäuse (1550') aufgenommen ist und umfasst:
i) ein Eingriffselement (1551a), welches zwischen einer passiven radialen Position und einer aktiven radialen Position radial bewegt werden kann, in welcher es eine Eingriffswirkung an dem äußeren ringförmigen Element (152) durchführt;
ii) einen Antriebsteil (1551b), welcher durch das Eingriffselement (1551a) in Eingriff genommen ist;
wobei der Antriebsteil (1551b) die Bewegung in der Umfangsrichtung der ringförmigen Zwischenstruktur (1550) hydraulisch antreibt, was wiederum das Eingriffselement (1551a) in Bezug auf den Antriebsteil (1551b) bewegt; wobei eine Umfangsbewegung des Eingriffselements (1551a) relativ zu dem Antriebsteil (1551b) einer Änderung einer radialen Position des Eingriffselements (1551a) entspricht.

2. Übertragungsanordnung (1) nach Anspruch 1, wobei der Antriebsteil (1551b) eine geneigte Ebene (1551c) umfasst, auf welcher das Eingriffselement (1551a) liegt, wobei eine Bewegung der ringförmigen Zwischenstruktur (1550) einer Änderung einer Position des Eingriffselements (1551a) auf der geneigten Ebene (1551c) und gleichzeitig der Positionsänderung in der radialen Richtung entspricht.

3. Übertragungsanordnung (1) nach einem der vorhergehenden Ansprüche, wobei die ringförmige Zwischenstruktur (1550) eine Mehrzahl von Antriebsgehäusen (1550') aufweist, welche gegenseitig in gleichen Winkelabständen angeordnet sind.

4. Übertragungsanordnung (1) nach Anspruch 3, wobei einige Antriebsgehäuse (1550') die hydraulische Antriebsvorrichtung (1551) aufnehmen, während die verbleibenden Antriebsgehäuse (1550') Hilfsantriebsvorrichtungen (1551') aufnehmen, wobei jede Hilfsantriebsvorrichtung (1551') umfasst:
i) ein Hilfseingriffselement (1551a'), welches zwischen einer passiven radialen Position und einer aktiven radialen Position radial bewegt werden kann, in welcher es eine Eingriffswirkung auf das äußere ringförmige Element (152) durchführt;
ii) einen Hilfsantriebsteil (1551b'), welcher durch das Eingriffselement (1551a') in Eingriff genommen ist;
wobei die Umfangsbewegung des Hilfseingriffselements (1551a') relativ zu dem Hilfsantriebsteil (1551b'), welche durch die Bewegung in der Umfangsrichtung der ringförmigen Zwischenstruktur (1550) verursacht wird, einer Änderung einer radialen Position des Hilfseingriffselements (1551a') entspricht.

5. Übertragungsanordnung (1) nach Anspruch 4, wobei der Hilfsantriebsteil (1551b') eine geneigte Hilfsebene (1551c') umfasst, auf welcher das Hilfseingriffselement (1551a') liegt, wobei eine Bewegung der ringförmigen Zwischenstruktur (1550) einer Änderung einer Position des Hilfseingriffselements (1551a') auf der geneigten Hilfsebene (1551c') und gleichzeitig der Positionsänderung in der radialen Richtung entspricht.

6. Übertragungsanordnung (1) nach einem der vorhergehenden Ansprüche, wobei die Antriebseinheit (155) ferner wenigstens ein elastisches Rückstellelement (1558) umfasst, welches dazu eingerichtet ist, in der Richtung entgegengesetzt zu den hydraulischen Antriebsvorrichtungen (1551) zu wirken, um die Antriebseinheit (155) in einer passiven Konfiguration zu halten.

7. Übertragungsanordnung (1) nach Anspruch 6 in Kombination mit einem der Ansprüche 3 bis 5, wobei jede Hilfsantriebsvorrichtung (1551') ein elastisches Rückstellelement (1558) umfasst, welches eine Schubwirkung entgegengesetzt zu der hydraulischen Antriebswirkung ausführt, welche durch die hydraulischen Antriebsvorrichtungen (1551) ausgeführt wird.

8. Übertragungsanordnung (1) nach einem der Ansprüche 1 bis 5, wobei jeder hydraulische Antriebsteil (1551a) und jeder mögliche Hilfsantriebsteil (1551a') integral mit dem inneren ringförmigen Element (151) verbunden sind.

9. Übertragungsanordnung (1) nach einem der vorhergehenden Ansprüche, wobei die Antriebseinheit (10) eine Mehrzahl von Antriebszahnrädern (150a, 150b, 150c, 150d) umfasst, welche jeweils durch eine bestimmte hydraulische Leitung (105a, 105b, 105c, 105d) hydraulisch angetrieben werden, welche in der Antriebswelle (100) erhalten ist, und wobei die Antriebseinheit (20) eine Mehrzahl angetriebener Zahnräder (250a, 250b, 250c, 250d) umfasst, welche jeweils mit dem jeweiligen Antriebszahnrad (150a, 150b, 150c, 150d) in Eingriff stehen.

10. Übertragungsanordnung (1) nach einem der vorhergehenden Ansprüche, umfassend eine Mehrzahl von Antriebseinheiten (10, 10'), welche jeweils eine Antriebswelle (100, 100') und wenigstens ein Antriebszahnrad (150, 150') umfassen.

11. Übertragungsanordnung (1) nach Anspruch 10, wobei jede Antriebseinheit (10, 10') an einer jeweiligen Antriebswelle (100, 100') wenigstens ein Antriebszahnrad (150, 150') umfasst, welches mit einem jeweiligen angetriebenen Zahnrad (250) in Eingriff steht, oder wobei die beiden Antriebszahnräder (150, 150') mit dem gleichen angetriebenen Zahnrad (250) in Eingriff stehen.

12. Übertragungsanordnung (1) nach einem der vorhergehenden Ansprüche, umfassend eine Antriebssteuereinheit (30), welche ein Magnetsteuerventil (300) an der Antriebsleitung (105) oder eine Mehrzahl von Magnetsteuerventilen (30a, 30b, 30c, 30d) an einer bestimmten Antriebsleitung (105a, 105b, 105c, 105d) umfasst, welche dazu eingerichtet sind, den Einlass der hydraulischen Antriebsflüssigkeit in diese Leitung je nach Bedarf einzustellen.

13. Getriebesystem (900), vorzugsweise eines Fahrzeugs, umfassend eine Übertragungsanordnung (1) nach einem der vorhergehenden Ansprüche, welche mit einer äußeren Antriebsanordnung (910), wie etwa der Motoreinheit des Fahrzeugs, verbindbar ist und mit einer äußeren angetriebenen Anordnung (920), wie etwa der Differenzialeinheit, welche die Bewegung auf die Räder des Fahrzeugs überträgt, verbindbar ist.

14. Getriebesystem (900), vorzugsweise eines Fahrzeugs, nach Anspruch 13, ferner umfassend eine Eingangseinheit (70), welche zwischen der äußeren Antriebsanordnung (910) und der Übertragungsanordnung (1) positioniert ist, wobei die Eingangseinheit (70) umfasst:
- eine Eingangswelle (700), welche durch die äußere Antriebsanordnung (910) in Drehung versetzt wird;
- ein Eingangszahnrad (750) in Eingriff mit der Antriebswelle (100), um sie in Drehung zu versetzen;
- ein Motorbremszahnrad (758), welches mittels eines Freilaufs mit der Antriebswelle (700) in Eingriff steht, so dass es nur in einigen kinematischen Situationen in eine Drehbewegung versetzt wird, welche auch die Drehung der angetriebenen Welle (200) einschließt.

15. Fahrzeuggetriebesystem nach Anspruch 14, wobei die Eingangseinheit (70) ein Umkehrzahnrad (755) umfasst, welches integral mit der Antriebswelle (700) verbunden ist und stets mit einem angetriebenen Umkehrzahnrad (257) in Eingriff steht, wobei das angetriebene Umkehrzahnrad (257) mit der angetriebenen Welle (200) verbindbar und davon trennbar ist.

## Revendications

1. Ensemble de transmission (1) adapté pour recevoir une action de mouvement d'un ensemble d'entraînement (910) extérieur pour la transmettre à un ensemble entraîné (920) extérieur, l'ensemble de transmission (1) comprenant :
i) une unité d'entraînement (10) pouvant être reliée fonctionnellement à l'ensemble d'entraînement (910) extérieur, comportant :
- un arbre d'entraînement (100) entraîné en rotation par l'ensemble d'entraînement (910) extérieur,
- au moins un engrenage d'entraînement (150) relié fonctionnellement à l'arbre d'entraînement (100) ;
ii) une unité entraînée (20) pouvant être reliée fonctionnellement à l'ensemble entraîné (920) extérieur, comportant :
- un arbre entraîné (200) adapté pour transmettre le mouvement de rotation à l'ensemble entraîné (920) extérieur,
- au moins un engrenage entraîné (250) entièrement relié à l'arbre entraîné (200), constamment engrené avec ledit au moins un engrenage d'entraînement (150) ;
ledit au moins un engrenage d'entraînement (150) comprenant, de façon concentrique par rapport à l'arbre d'entraînement (100), un élément annulaire intérieur (151) entièrement relié à l'arbre d'entraînement (100) et un élément annulaire extérieur (152) comprenant des dents d'engrenage d'entraînement (152') engrenées avec des dents d'engrenage entraîné (252') ;
l'engrenage d'entraînement (150) comprenant une unité d'entraînement hydraulique (155) alimentée hydrauliquement par un conduit hydraulique (105) formé dans l'arbre d'entraînement (100), l'unité d'entraînement hydraulique (155) étant interposée entre l'élément annulaire intérieur (151) et l'élément annulaire extérieur (152) et pouvant être mis hydrauliquement en une configuration active dans laquelle l'élément annulaire extérieur (152) est relié à l'élément annulaire intérieur (151) et entraîné en rotation par ce dernier, et en une configuration passive dans laquelle l'élément annulaire extérieur (152) est déconnecté en rotation de l'élément annulaire intérieur (151);
l'ensemble de transmission (1) étant **caractérisé en ce que** l'unité d'entraînement hydraulique (155) comprend :
- une structure annulaire intermédiaire (1550) interposée entre l'élément annulaire intérieur (151) et l'élément annulaire extérieur (152), la structure annulaire intermédiaire (1550) ayant au moins un boîtier d'entraînement (1550'),
- un dispositif d'entraînement hydraulique (1551) logé dans le boîtier d'entraînement (1550') et comportant :
i) un élément d'engagement (1551a) qui peut être déplacé radialement entre une position radiale passive et une position radiale active dans laquelle il effectue une action d'engagement sur l'élément annulaire extérieur (152),
ii) un élément d'entraînement (1551b) engagé par l'élément d'engagement (1551a) ;
l'élément d'entraînement (1551b) entraînant hydrauliquement le mouvement dans la direction circonférentielle de la structure annulaire intermédiaire (1550) qui, de son côté, déplace l'élément d'engagement (1551a) par rapport à l'élément d'entraînement (1551b) ;
un mouvement circonférentiel de l'élément d'engagement (1551a) par rapport à l'élément d'entraînement (1551b) correspondant à un changement de position radiale de l'élément d'engagement (1551a).

2. Ensemble de transmission (1) selon la revendication 1, **caractérisé en ce que** l'élément d'entraînement (1551b) comprend un plan incliné (1551c) sur lequel l'élément d'engagement (1551a) repose, un mouvement de la structure annulaire intermédiaire (1550) correspondant à un changement de la position de l'élément d'engagement (1551a) sur le plan incliné (1551c) et, en même temps, au changement de la position dans la direction radiale.

3. Ensemble de transmission (1) selon l'une des revendications précédentes, **caractérisé en ce que** la structure annulaire intermédiaire (1550) comprend une pluralité de boîtiers d'entraînement (1550'), angulairement équidistants les uns des autres.

4. Ensemble de transmission (1) selon la revendication 3, **caractérisé en ce que** quelques boîtiers d'entraînement (1550') logent le dispositif d'entraînement hydraulique (1551), alors que les boîtiers d'entraînement (1550') restants logent des dispositifs d'entraînement auxiliaires (1551'), chaque dispositif d'entraînement auxiliaire (1551') comprenant :
i) un élément d'engagement auxiliaire (1551a') qui peut être déplacé radialement entre une position radiale passive et une position radiale active dans laquelle il effectue une action d'engagement sur l'élément annulaire extérieure (152),
ii) un élément d'entraînement auxiliaire (1551b') engagé par l'élément d'engagement (1551a') ;
le mouvement circonférentiel de l'élément d'engagement auxiliaire (1551a') par rapport à l'élément d'entraînement auxiliaire (1551b'), incité par le mouvement de la structure annulaire intermédiaire (1550) dans la direction circonférentielle,
correspondant à un changement de la position radiale de l'élément d'engagement auxiliaire (1551a').

5. Ensemble de transmission (1) selon la revendication 4, **caractérisé en ce que** l'élément d'entraînement auxiliaire (1551b') comprend un plan incliné auxiliaire (1551c') sur lequel l'élément d'engagement auxiliaire (1551a') repose, un mouvement de la structure annulaire intermédiaire (1550) correspondant à un changement de la position de l'élément d'engagement auxiliaire (1551a') sur le plan incliné auxiliaire (1551c') et, en même temps, au changement de la position dans la direction radiale.

6. Ensemble de transmission (1) selon l'une des revendications précédentes, **caractérisé en ce que** l'unité d'entraînement (155) comprend en outre au moins un élément de retour élastique (1558) adapté pour agir dans la direction opposée aux dispositifs d'entraînement hydrauliques (1551) pour maintenir l'unité d'entraînement (155) dans une configuration passive.

7. Ensemble de transmission (1) selon la revendication 6 combinée avec l'une des revendications 3 à 5, chaque dispositif d'entraînement auxiliaire (1551') comprenant un élément de retour élastique (1558) qui effectue une action de poussée opposée à l'action d'entraînement hydraulique effectuée par les dispositifs d'entraînement hydrauliques (1551).

8. Ensemble de transmission (1) selon l'une des revendications 1 à 5, **caractérisé en ce que** chaque élément d'entraînement hydraulique (1551a) et chaque élément d'entraînement auxiliaire (1551a') possible sont intégralement reliés à l'élément annulaire intérieure (151).

9. Ensemble de transmission (1) selon l'une des revendications précédentes, **caractérisé en ce que** l'unité d'entraînement (10) comprend une pluralité de roues dentées d'entraînement (150a, 150b, 150c, 150d) dont chacune est entraînée hydrauliquement par un conduit hydraulique spécifique (105a, 10b, 105c, 105d) obtenu dans l'arbre d'entraînement (100), et l'unité entraînée (20) comprend une pluralité de roues dentées entraînées (250a, 250b, 250c, 250d) dont chacune est engagée dans la roue dentée d'entraînement (150a, 150b, 150c, 150d) correspondante.

10. Ensemble de transmission (1) selon l'une des revendications précédentes, comprenant une pluralité d'unités d'entraînement (10, 10') dont chacune comprend un arbre d'entraînement (100, 100') et au moins une roue dentée d'entraînement (150, 150').

11. Ensemble de transmission (1) selon la revendication 10, **caractérisé en ce que** chaque unité d'entraînement (10, 10') sur un arbre d'entraînement (100, 100') correspondant comprend au moins une roue dentée d'entraînement (150, 150') engagée avec une roue dentée entraînée (250) correspondante ou les deux roues dentées d'entraînement (150, 150') sont engagées avec la même roue dentée entraînée (250).

12. Ensemble de transmission (1) selon l'une des revendications précédentes, **caractérisé en ce qu'**une unité de commande d'entraînement (30) comprend une électrovanne de commande (300) au conduit d'entraînement (105) ou une pluralité d'électrovannes de commande (300) à un conduit d'entraînement (105a, 105b, 105c, 105d) spécifique adapté pour ajuster l'entrée de liquide d'entraînement hydraulique dans ledit conduit selon les besoins.

13. Système de boîte de vitesses (900), de préférence d'un véhicule, comprenant un ensemble de transmission (1) selon l'une des revendications précédentes, pouvant être relié à un ensemble d'entraînement extérieur (910) tel que l'unité de moteur du véhicule, et pouvant être relié à un ensemble entraîné (920) extérieur tel que l'unité de différentiel qui transmet le mouvement aux roues du véhicule.

14. Système de boîte de vitesses (900), de préférence d'un véhicule, selon la revendication 13, comprenant en outre une unité d'entrée (70) positionnée entre l'ensemble d'entraînement extérieur (910) et l'ensemble de transmission (1), l'unité d'entrée (70) comprenant :
- un arbre d'entrée (700) entraîné en rotation par l'ensemble d'entraînement extérieur (910),
- une roue dentée d'entrée (750) engagée avec l'arbre d'entraînement (100) pour l'entraîner en rotation,
- une roue dentée de freinage de moteur (758) engagée avec l'arbre d'entraînement (700) par une roue libre de façon que, uniquement dans quelques situations cinématiques, elle est mue en rotation entraînant aussi la rotation de l'arbre entraîné (200).

15. Système de boîte de vitesses de véhicule selon la revendication 14, **caractérisé en ce que** l'unité d'entrée (70) comprend une roue dentée inverseuse (755) intégralement reliée à l'arbre d'entraînement (700) et toujours engagé avec une roue dentée inverseuse entraînée (257), la roue dentée inverseuse entraînée (257) pouvant être reliée/séparée à/de l'arbre entraîné (200).
